# EUROPÄISCHE PATENTSCHRIFT

(11) **EP 2 507 974 B1**
(45) Veröffentlichungstag und Bekanntmachung des Hinweises auf die Patenterteilung: **28.08.2013**
(21) Anmeldenummer: 10782189.4
(22) Anmeldetag: 11.11.2010
(51) Int. Cl.: H04L 29/08, G05B 19/418

(54) **KOMMUNIKATION ZWISCHEN ELEMENTEN EINES SYSTEMS**
COMMUNICATION BETWEEN ELEMENTS OF A SYSTEM
COMMUNICATION ENTRE DES ÉLÉMENTS D'UN SYSTÈME

(30) Priorität: 03.12.2009 DE 102009056803
(43) Veröffentlichungstag der Anmeldung: 10.10.2012
(73) Patentinhaber: Robert Bosch GmbH, 70469 Stuttgart (DE)
(72) Erfinder: BRUEHL, Jens, 97816 Lohr am Main (DE); LANDGRAF, Guenther, 97753 Karlstadt (DE)
(74) Vertreter: Thürer, Andreas
(86) Internationale Anmeldenummer: PCT/EP2010/006871
(87) Internationale Veröffentlichungsnummer: WO 2011/066900

(56) Entgegenhaltungen:
- EP-A1- 1 916 578
- EP-A2- 2 042 956
- US-A1- 2008 010 282
- Anonymous: "OPC Unified Architecture Specification Part:1 Overview and Concepts, Release 1.01", OPC Foundation , 5. Februar 2009 (2009-02-05), Seite 28PP, XP002630848, Gefunden im Internet: URL:https://www.opcfoundation.org/Download s.aspx/Unified Architecture/OPC UA Part 1-Overview and Concepts 1.01 Specification.zip?RI=414 [gefunden am 2011-03-31]
- ANONYMOUS: "Sercos III (Version vom 05.01.2006)", Wikipedia, die freie Enzyklopädie , 5. Januar 2006 (2006-01-05), XP002444456, Gefunden im Internet: URL:http://de.wikipedia.org/w/index.php?ti tle=SERCOS_III&oldid=12276910 [gefunden am 2007-07-20]
- BASSI E ET AL: "Communication protocols for electrical drives", IEEE IECON 21ST INTERNATIONAL CONFERENCE ON INDUSTRIAL ELECTRONICS, CONTROL, AND INSTRUMENTATION, 1995., PROCEEDIN GS OF THE 1995. ORLANDO, FL, USA, Bd. 1, 6. November 1995 (1995-11-06), - 10. November 1995 (1995-11-10), Seiten 706-711, XP010154760, NEW YORK, NY, USA,IEEE, US DOI: 10.1109/IECON.1995.483494 ISBN: 978-0-7803-3026-9

## Beschreibung

Die vorliegende Erfindung betrifft ein Verfahren zur Kommunikation zwischen Elementen eines Systems, insbesondere zwischen Komponenten eines automatisierten Fertigungssystems, sowie eine Vorrichtung, die zur Durchführung des Verfahrens eingerichtet ist.

### Stand der Technik

Insbesondere in der Automatisierungstechnik sind zum selbständigen und unabhängigen Betrieb von Maschinen oder Anlagen, also komplexen Systemen, die aus unterschiedlichen Einzelgeräten bzw. Systemelementen aufgebaut sind, große Datenmengen in Echtzeit und Nicht-Echtzeit auszutauschen. Zur Kommunikation zwischen den häufig sehr heterogenen Systemelementen werden dabei in der Regel proprietäre Kommunikationsmechanismen (KM) gemäß entsprechender Kommunikationsstandards verwendet.

In der Regel werden jeweils zwischen den verschiedenen Geräten, wie z.B. speicherprogrammierbaren Steuerungen (SPS), Benutzeroberflächen (BOF), numerischen Steuerungen (NC), elektrischen Antrieben, sowie externen speicherprogrammierbaren Steuerungen, sonstigen Fertigungssteuerungen und Condition Monitoring Systemen Schnittstellen eingerichtet. Somit werden KM häufig mehrfach und in unterschiedlicher Weise realisiert. Eine derartige Einrichtung eines Kommunikationssystems erweist sich in der Praxis aufgrund der unnötigen Redundanz als aufwendig und fehleranfällig.

Ferner leidet ein entsprechend aufgebautes System häufig an einer sogenannten mangelnden Durchgängigkeit, d.h. einer Inhomogenität und mangelnden Kompatibilität der einzelnen KM, die insbesondere beim Aufbau eines Systems und bei der Implementierung neuer Funktionen von Nachteil ist.

Zur Übertragung von Daten zwischen einer Steuerung, insbesondere zwischen einer speicherprogrammierbaren Steuerung, und einem Visualisierungs- oder MES-System (Manufacture Execution System) ist der Kommunikationsstandard OPC-UA (OPC Unified Architecture, im Folgenden kurz UA) der OPC Foundation bekannt. UA ist portabel implementierbar und besitzt eine gute Skalierbarkeit. Die im Rahmen von UA definierten Basisdienste weisen abstrakte Methodenbeschreibungen auf und sind protokollunabhängig. In der Veröffentlichung "OPC Unified Architecture Specification, Part 1: Overview and Concepts, Release 1.01, February 5, 2009" wird beschrieben, dass zur Verbindung von OPC-Servern miteinander diese jeweils über eine Server-Schnittstelle und eine Client-Schnittstelle verfügen.

Es ist wünschenswert, Verfahren gemäβ dem Anspruch 1, zur Einrichtung einer durchgängigen Kommunikation zwischen Elementen eines Automatisierungssystems, insbesondere zwischen Komponenten eines automatisierten Fertigungssystems, bereitzustellen.

### Offenbarung der Erfindung

Vor diesem Hintergrund stellt die vorliegende Erfindung ein Verfahren einer Kommunikation zwischen Elementen eines Systems und eine zughörige Vorrichtung zur Durchführung des Verfahrens mit den Merkmalen der unabhängigen Patentansprüche bereit. Bevorzugte Ausgestaltungen sind in den jeweiligen abhängigen Ansprüchen angegeben.

### Vorteile der Erfindung

Die vorliegende Erfindung ermöglicht insbesondere, sämtliche Kommunikationsaufgaben sowohl zwischen Nicht-Echtzeit-Applikationen als auch zwischen Echtzeit-Applikationen im Automatisierungsbereich über eine einzige Kommunikationsschnittstelle bzw. einen einzigen KM abzuwickeln. Hierbei wird vorteilhafterweise als Schnittstelle der zuvor erwähnte Standard UA verwendet.

Die besonderen Vorteile des erfindungsgemäßen Verfahrens werden dadurch erzielt, dass sowohl ein Client als auch ein Server in wenigstens einigen Elementen des Systems, also den entsprechenden Geräten, vorgesehen wird. Durch die identische Kommunikationsschnittstelle in den einzelnen Elementen wird entsprechend auch eine identische Verhaltensweise aller Geräte bewirkt. Beispielsweise kann hierdurch ein Anwender innerhalb eines visuellen Programms mit identischer Syntax und mit gleichen Regeln etwa Daten von einer SPS anfordern, wie er dies auch vom NC-Programm aus tut. Darüber hinaus lassen sich durch die erfindungsgemäße Lösung neue Funktionen implementieren, beispielsweise kann eine SPS problemlos Daten von einem externen Server laden.

Im Gegensatz zum Stand der Technik, wo Kommunikationsschnittstellen entweder für eine Echtzeit- oder eine Nicht-Echtzeit-Kommunikation vorgesehen sind, werden im Rahmen der vorliegenden Erfindung mit besonderem Vorteil gemeinsame Echtzeit- und Nicht-Echtzeit-Schnittstellen verwendet.

Hierdurch lässt sich vermeiden, wie zuvor angegeben, Kommunikationsschnittstellen mehrfach in unterschiedlicher Weise realisieren zu müssen. Daher ergibt sich eine Vereinfachung des gesamten Systems mit erhöhter Durchgängigkeit. Kommunikationsmechanismen sind somit nunmehr lediglich einmal zu implementieren und nicht mehr gerätespezifisch anzupassen. Eine Unterscheidung zwischen Echtzeit- und Nicht-Echtzeit-Kommunikationsmechanismen ist, zumindest aus Anwendersicht, nicht mehr erforderlich.

Mit anderen Worten erhält vorzugsweise jedes Element des Systems einen UA-Client und einen UA-Server, worüber dann jeglicher Datenverkehr zwischen den Elementen in standardisierter Weise, insbesondere UA-konform, abgewickelt wird.

Gemäß einer besonders bevorzugten Ausführungsform kann, insbesondere im Echtzeit-Kommunikationsbereich, die UA-Schnittstelle derart erweitert werden, dass die Echtzeit-Daten hochpriorisiert zwischen der UA-Schnittstelle und beispielsweise einem Sercos III-Echtzeit-Kanal (in Form eines Masters oder eines Slaves) ausgetauscht werden können.

Gemäß einer weiteren bevorzugten Ausgestaltung kann vorgesehen sein, dass, falls die Elemente im Rahmen einer einzigen Hardwareeinrichtung implementiert sind, diese zusätzlich ihre Daten sowohl in Echtzeit als auch in Nicht-Echtzeit direkt über Sockets austauschen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt eine schematische Darstellung eines Systems mit Elementen zur Veranschaulichung des erfindungsgemäßen Verfahrens gemäß einer besonders bevorzugten Ausführungsform.
- Figur 2: zeigt eine schematische Darstellung einer Kommunikation zwischen zwei Elementen zur Veranschaulichung des erfindungsgemäßen Verfahrens gemäß einer weiteren bevorzugten Ausführungsform.

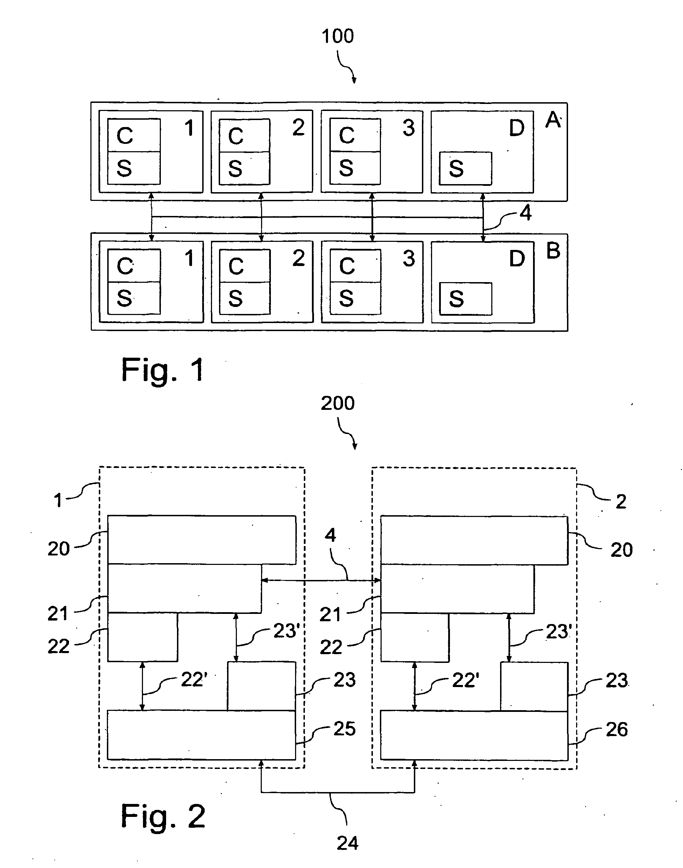

In Figur 1 ist ein System, insgesamt mit 100 bezeichnet, dargestellt, anhand dessen das Verfahren gemäß einer besonders bevorzugten Ausführungsform der Erfindung veranschaulicht ist. Die Anordnung 100 weist die (Teil-)Systeme A und B auf. Jedes der Teilsysteme A, B verfügt über die Elemente bzw. Systemkomponenten 1, 2, 3 und D. Die Systemelemente 1, 2, 3, D kommunizieren über einen Kommunikationsmechanismus 4 bzw. über entsprechende Kommunikationskanäle und Schnittstellen.

Gemäß dem Stand der Technik würde jedes Teilsystem A, B nur über einen Server verfügen, wohingegen alle übrigen Elemente 1, 2, 3 ihre Daten in Form von Providern zur Verfügung stellen würden.

Gemäß der Ausführungsform wird nun im Gegensatz dazu vorgeschlagen, jedes der Elemente 1, 2, 3, D mit einem Server S, insbesondere einem UA-Server S auszustatten. Hierdurch kann beispielsweise auf zusätzliche FTP-Server, von denen eine SPS ein SPS-Programm laden kann, verzichtet werden. Die beteiligten Elemente 1, 2, 3, D können beispielsweise einen PC, eine numerische Steuerung bzw. eine Bewegungssteuerung, eine speicherprogrammierbare Steuerung, SERCOS-Antriebe, SERCOS-Eingabe-/ Ausgabe-Geräte oder Condition Monitoring Systeme umfassen. Ferner wird vorgeschlagen, jedes Gerät (gegebenenfalls mit Ausnahme von Antrieben D und eines Eingabe-/Ausgabe-Geräts) mit einem Client C, insbesondere einem UA-Client C, auszustatten. Durch die erfindungsgemäßen Maßnahmen können damit erstmalig standardisiert Daten zwischen den Elementen 1, 2, 3, D sowie auch zwischen den unterschiedlichen Teilsystemen A, B ausgetauscht werden. In der gleichen Weise können auch Daten mit anderen externen Systemen, gleich welcher Art, ausgetauscht werden.

Durch das aufgezeigte Verfahren können die Möglichkeiten der UA-Datenmodellierung (Namespaces, Atributes, Node Classes, Reference Types, References across Servers, Properties, Server-Views, Space Organization, Device Types, Modelling Rules, Events und Event Types wie z.B. Maintenance Events, Alarms, etc.) geräteübergreifend genutzt werden.

Durch die erfindungsgemäßen Maßnahmen wird insgesamt eine bessere Durchgängigkeit zwischen den einzelnen Geräten und auch zwischen unterschiedlichen Systemen geschaffen. Ferner existieren bessere Beschreibungsmöglichkeiten für den Endanwender.

Bestimmte Anwendungen erfordern eine außerordentlich hohle Datenübertragungsrate und/oder Taktfrequenz, wobei Daten beispielsweise im Dateisystem einer numerischen Steuerung oder eines PC abgespeichert werden müssen. Insbesondere bei sehr kurzen Zykluszeiten und/oder sehr großen Datenmengen (Items) in kurzer Zeit kann sich dabei eine reine OPC-UA-Lösung als nicht ausreichend erweisen.

Gemäß einer besonders bevorzugten Ausführungsform wird in diesem Fall vorgeschlagen, eine Kommunikationsschnittstelle, wie beispielsweise die UA-Schnittstelle, derart zu erweitern, dass Daten priorisiert mittels der Kommunikationsschnittstelle über einen Kommunikationskanal ausgetauscht werden. Figur 2 zeigt hierzu, insgesamt mit 200 bezeichnet, ein System aus Komponenten bzw. Elementen 1, 2, das derart erweiterte Schnittstellen aufweist. Eine Echtzeit- bzw. Nicht-Echtzeit-Applikation ist in beiden Elementen mit 20 bezeichnet. Jedes Element verfügt über eine Kommunikationsschnittstelle 21, beispielsweise eine OPC-UA-Schnittstelle. Beide Schnittstellen können mittels eines Nicht-Echtzeit-Kommunikationskanals 4, wie auch in Figur 1 veranschaulicht, Daten austauschen. Alternativ oder zusätzlich kann auch vorgesehen sein, jeweils einen SERCOS-Master 25 und/oder einen SERCOS-Slave 26 in den Elementen 1 und 2 vorzusehen. In diesem Fall verfügt sowohl der SERCOS-Master als auch der SERCOS-Slave über eine Schnittstelle 23 zum Nicht-Echtzeit-Datenaustausch. Eine Nicht-Echtzeit-Kommunikation über OPC-UA findet in diesem Fall über Kommunikationskanal 23' statt. Eine derartige Kommunikation ist dann vorgesehen, wenn SERCOS (Ethernet) zur Verfügung steht. Die eigentliche Kommunikation zwischen den Elementen 1 und 2 erfolgt über Kommunikationskanal 24, über den eine Nicht-Echtzeit-Kommunikation über Ethernet abgewickelt wird.

Vorteilhafterweise kann nun ferner vorgesehen sein, eine UA-Echtzeit-Schnittstelle 22 bereitzustellen und hierdurch die OPC-UA-Schnittstelle zu erweitern. Über diese UA-Echtzeit-Erweiterung können UA-Echtzeitzugriffe bzw. Datenaustausche hochpriorisiert im UA-Server mit dem SERCOS III-Kommunikationselement 25 bzw. 26 (Master bzw. Slave) durchgeführt werden. Der hierzu bereitgestellte Echtzeit-Kommunikationskanal über das SERCOS III-Protokoll ist in der Figur 2 mit 22' bezeichnet. Im Fall der vorgesehenen Erweiterung 22 werden über Datenkanal 24 SERCOS-Echtzeit-Kommunikationsdaten ausgetauscht.

## Patentansprüche

1. Verfahren zur Kommunikation (100, 200) zwischen Elementen (1, 2, 3, D) eines Systems (A, B), insbesondere zwischen Komponenten (1, 2, 3, D) eines automatisierten Fertigungssystems (A, B), gemäß einem Kommunikationsmechanismus, das beinhaltet:
Bereitstellen jeweils wenigstens eines dem Kommunikationsmechanismus entsprechenden Servers (S) für jedes der an der Kommunikation beteiligten Elemente (1, 2, 3, D),
Bereitstellen jeweils wenigstens eines dem Kommunikationsmechanismus entsprechenden Clients (C) für wenigstens einen Teil der an der Kommunikation beteiligten Elemente (1, 2, 3), und
Austauschen von Daten zwischen wenigstens zwei Elementen (1, 2, 3, D) des Systems über den Kommunikationsmechanismus,
wobei ferner jeweils wenigstens eine dem Client (C) und/oder dem Server (S) zugeordnete, dem Kommunikationsmechanismus entsprechende Kommunikationsschnittstelle (21) verwendet wird, **dadurch gekennzeichnet, dass** die Kommunikationsschnittstelle (21) derart erweitert wird, dass Daten priorisiert mittels der Kommunikationsschnittstelle (21) über einen Kommunikationskanal (24) ausgetauscht werden, wobei als Kommunikationsschnittstelle (21) eine OPC-UA-Schnittstelle verwendet wird, die mittels Echtzeit- (22) und/oder Nicht-Echtzeitmitteln (23) erweitert wird, wobei als Kommunikationskanal (24) ein Sercos III-Echtzeit- und/oder Nicht-Echtzeitkanal (24) zwischen einem Master (25) und einem Slave (26) des jeweiligen Elements (1,2,3) verwendet wird.

2. Verfahren nach Anspruch 1, bei dem ferner zusätzliche Daten über Sockets direkt ausgetauscht werden.

3. Verfahren nach Anspruch 1 oder 2, bei dem für bestimmte Elemente (D), insbesondere einen Antrieb und/oder ein Eingabe-Ausgabe-Gerät, jeweils nur ein Server (S) bereitgestellt wird und für die übrigen Elemente (1, 2, 3) jeweils ein Client (C) und ein Server (S) bereitgestellt werden.

4. Verfahren nach einem der vorstehenden Ansprüche, das in einem System (A, B) durchgeführt wird, das wenigstens eine Komponente einer speicherprogrammierbaren Steuerung, einer Benutzeroberfläche, einer numerischen Steuerung, einer externen speicherprogrammierbaren Steuerung, eines Condition Monitoring Systems, einer Visualisierungseinrichtung, eines Produktionsleitsystems und/oder einer Fertigungssteuerung aufweist.

5. Verfahren nach einem der vorstehenden Ansprüche, das für eine Echtzeit- und/oder eine Nicht-Echtzeitkommunikation verwendet wird.

6. Kommunikationssystem (A, B) mit Elementen (1, 2, 3, D), das zur Durchführung alter Schritte eines Verfahrens nach einem der vorstehenden Ansprüche eingerichtet ist

## Claims

1. Method for communicating (100, 200) between elements (1, 2, 3, D) of a system (A, B), in particular between components (1, 2, 3, D) of an automated production system (A, B), according to a communication mechanism,
which comprises:
providing at least one respective server (S) corresponding to the communication mechanism for each of the elements (1, 2, 3, D) involved in communication,
providing at least one respective client (C) corresponding to the communication mechanism for at least some of the elements (1, 2, 3) involved in communication, and
interchanging data between at least two elements (1, 2, 3, D) of the system via the communication mechanism,
at least one respective communication interface (21) associated with the client (C) and/or the server (S) and corresponding to the communication mechanism also being used, **characterized in that** the communication interface (21) is expanded in such a manner that data are interchanged in a prioritized manner using the communication interface (21) via a communication channel (24), an OPC UA interface which is expanded using real-time means (22) and/or non-real-time means (23) being used as the communication interface (21), and a Sercos III real-time channel and/or non-real-time channel (24) being used as the communication channel (24) between a master (25) and a slave (26) of the respective element (1, 2, 3).

2. Method according to Claim 1, in which additional data are also directly interchanged via sockets.

3. Method according to Claim 1 or 2, in which only one server (S) is respectively provided for particular elements (D), in particular a drive and/or an input/output device, and a client (C) and a server (S) are respectively provided for the remaining elements (1,2,3).

4. Method according to one of the preceding claims, which is carried out in a system (A, B) having at least one component of a programmable logic controller, a user interface, a numerical controller, an external programmable logic controller, a condition monitoring system, a visualization device, a production control system and/or a production controller.

5. Method according to one of the preceding claims, which is used for real-time communication and/or non-real-time communication.

6. Communication system (A, B) having elements (1, 2, 3, D), which system is set up to carry out all of the steps of a method according to one of the preceding claims.

## Revendications

1. Procédé de communication (100, 200) entre des éléments (1, 2, 3, D) d'un système (A, B), notamment entre des composants (1, 2, 3, D) d'un système de fabrication automatisé (A, B), conformément à un mécanisme de communication, qui comprend :
la fourniture respective d'au moins un serveur (S) correspondant au mécanisme de communication pour chacun des éléments participant à la communication (1, 2, 3, D),
la fourniture respective d'au moins un client (C) correspondant au mécanisme de communication pour au moins certains des éléments participant à la communication (1, 2, 3), et
l'échange de données entre au moins deux éléments (1, 2, 3, D) du système par l'intermédiaire du mécanisme de communication,
dans lequel au moins une interface de communication (21) associée au client (C) et/ou au serveur (S) et correspondant au mécanisme de communication est en outre utilisée, **caractérisé en ce que** l'interface de communication (21) est étendue de telle sorte que des données rendues prioritaires au moyen de l'interface de communication (21) sont échangées par l'intermédiaire d'un canal de communication (24), dans lequel une interface OPC-UA est utilisée en tant qu'interface de communication (21), celle-ci étant étendue par des moyens temps réel (22) et/ou des moyens non-temps réel (23), dans lequel, en tant que canal de communication (24) on utilise un canal temps réel SERCOS III et/ou un canal non-temps réel (24) entre un maître (25) et un esclave (26) de l'élément respectif (1, 2, 3).

2. Procédé selon la revendication 1, dans lequel des données supplémentaires sont en outre directement échangées par l'intermédiaire de connecteurs.

3. Procédé selon la revendication 1 ou 2, dans lequel il est prévu un seul serveur (S) pour des éléments particuliers (D), notamment pour un appareil d'attaque et/ou d'entrée-sortie et en ce qu'il est respectivement prévu un client (C) et un serveur (S) pour les éléments restants (1, 2, 3).

4. Procédé selon l'une quelconque des revendications précédentes, qui est mis en oeuvre dans un système (A, B) et qui comprend au moins un composant d'un dispositif de commande logique programmable, d'une interface utilisateur, d'une commande numérique, d'un automate programmable externe, d'un système de surveillance d'état, d'un dispositif de visualisation, d'un système de contrôle de la production, et/ou d'un dispositif de commande de production.

5. Procédé selon l'une quelconque des revendications précédentes, qui est utilisé pour une communication en temps réel et/ou non en temps réel.

6. Système de communication (A, B) comportant des éléments (1, 2, 3, D), qui est conçu pour exécuter toutes les étapes d'un procédé selon l'une quelconque des revendications précédentes.
